# EUROPÄISCHE PATENTSCHRIFT

(11) **EP 2 085 333 B1**
(45) Veröffentlichungstag und Bekanntmachung des Hinweises auf die Patenterteilung: **07.12.2011**
(21) Anmeldenummer: 09000804.6
(22) Anmeldetag: 21.01.2009
(51) Int. Cl.: B65G 1/14

(54) **Stapelelement für Kühl- und/oder Gefriergeräte**
Stacking element for refrigerating and/or cooling devices
Elément d'empilement pour appareils de refroidissement et/ou de congélation

(30) Priorität: 31.01.2008 DE 202008001433 U
(43) Veröffentlichungstag der Anmeldung: 05.08.2009
(73) Patentinhaber: Liebherr-Hausgeräte Lienz GmbH, 9900 Lienz (AT)
(72) Erfinder: Kanzian, Rudolf, 9635 Dellach/Gail (DE); Stocker, Richard, 9900 Lienz (AT)
(74) Vertreter: Herrmann, Uwe

(56) Entgegenhaltungen:
- EP-A- 1 378 460
- FR-A- 2 711 361

## Beschreibung

Die vorliegende Erfindung betrifft ein Stapelelement für Kühl- und/oder Gefriergeräte, insbesondere für Kühl- und/oder Gefriertruhen.

Aus dem Stand der Technik ist es bekannt, zum Zwecke der Lagerung von Kühlund/oder Gefriertruhen diese je nach Konstruktion einfach übereinanderzustellen oder, sofern dies aufgrund von Standfüßen oder Rollen nicht möglich ist, die aufgesetzte Truhe nach vorne zu kippen und mit ihrer Frontseite auf die darunter befindliche Truhe aufzusetzen. Daraus ergibt sich zwar der Vorteil, dass die Truhen ohne Zusatzteile und somit ohne Mehrkosten aufeinander gestapelt werden können, jedoch besteht ein wesentlicher Nachteil darin, dass auf diese Weise keine stabile, erschütterungsfeste bzw. erdbebensichere Lagerung möglich ist. Ein weiterer Nachteil besteht darin, dass die beschriebene Lagerung nur möglich ist, wenn die untere Truhe eine flache, ebene Oberseite aufweist, was in anderen Worten bedeutet, dass die Stapelung von Truhen mit gewölbtem Deckel nicht möglich ist. Wird die oben befindliche Truhe auf ihre Frontseite gelegt, besteht ein weiterer Nachteil darin, dass es dort unter Umständen zu Beschädigungen beispielsweise des Brandings kommen kann.

Weitere Stapelelemente sind aus dem Stand der Technik bekannt. Die FR 2 711 361 A1 offenbart beispielsweise ein Stapelelement für Metallfässer, das auf der Ober- und Unterseite je einen über die gesamte Länge durchgängigen Aufnahmebereich aufweist, in die jeweils der Randwulst eines Fasses eingesetzt werden kann. Vorzugsweise werden drei Stapelelemente gleichmäßig voneinander beabstandet auf das untere Fass aufgesetzt und sodann das obere Fass in die Aufnahmen der Stapelelemente aufgesetzt.

Der vorliegenden Erfindung liegt daher die Aufgabe zugrunde, eine Möglichkeit zur zuverlässigen und sicheren Stapelbarkeit von Kühl- und/oder Gefriergeräten, insbesondere von Kühl- und/oder Gefriertruhen zu schaffen.

Diese Aufgabe wird durch ein Stapelelement mit den Merkmalen des Anspruchs 1 gelöst. Danach ist vorgesehen, dass das Stapelelement eine Kontur aufweist, die einen ersten Aufnahmebereich für das unten angeordnete Gerät sowie einen zweiten Aufnahmebereich für das darüber befindliche Gerät aufweist, und dass der erste und/oder der zweite Aufnahmebereich derart ausgestaltet ist, dass in diesem der jeweilige Randbereich sowie ein Teilbereich des jeweiligen front- und/oder rückseitigen Randbereiches der Geräte aufnehmbar ist. Erfindungsgemäß ist somit vorgesehen, dass die Geräte zum Zwecke ihrer Stapelung nicht einfach übereinander gestellt werden, sondern in einen Aufnahmebereich eines Stapelelementes eingesetzt werden. Das Stapelelement weist somit einen Aufnahmebereich für das untere sowie auch für das obere Gerät auf und ermöglicht auf diese Weise, dass die Geräte in einer bestimmten Position relativ zueinander angeordnet werden können, die eine Beschädigung der Geräte ausschließt und eine sichere Fixierung der Geräte ermöglicht. Ferner kann das Stapelelement sich im Bereich der Geräteseiten erstrecken und abschnittsweise oder vollständig auch im front- und/oder rückwärtigen Randbereich der Geräte.

Vorzugsweise ist der der erste und/oder der zweite Aufnahmebereich derart ausgestaltet ist, dass in diesem der jeweilige Randbereich der Geräte aufnehmbar ist. Dabei kann es sich um den seitlichen Randbereich oder/oder um den frontseitigen und/oder auch um den rückseitigen Randbereich der Geräte handeln.

Denkbar ist es beispielsweise, dass zum Zwecke der Stapelung zwei erfindungsgemäße Stapelelemente auf die jeweiligen seitlichen Randbereiche des unten stehenden Gerätes aufgesetzt werden und sodann auf die beiden Stapelelemente bzw. in deren Aufnahmebereiche das oben anzuordnende Gerät eingesetzt wird.

Die Stapelung von Geräten mittels der erfindungsgemäßen Stapelelemente ist selbstverständlich nicht auf zwei Geräte beschränkt.

Das Stapelelement kann derart ausgeführt sein, dass der erste und der zweite Aufnahmebereich zu einer durch das Stapelelement verlaufenden Ebene spiegelsymmetrisch ausgeführt sind. In diesem Fall sind die Stapelelemente wechselseitig, das heißt beispielsweise sowohl für den rechten als auch für den linken Randbereich der Geräte einsetzbar.

Von der Erfindung ist jedoch auch umfasst, dass die Stapelelemente nicht spiegelsymmetrisch ausgeführt sind. So ist es beispielsweise denkbar, dass einer der Aufnahmebereiche eben oder im wesentlichen eben und der andere der Aufnahmebereiche zumindest abschnittsweise gekrümmt bzw. gewölbt ausgeführt ist. Eine solche Ausführungsform kann eingesetzt werden, wenn die Oberseite der Geräte eine Wölbung aufweist, die beispielsweise durch einen gewölbten Glasschiebedeckel bzw. Rahmen oder der gleichen bedingt ist. In diesem Fall wird der gekrümmte Aufnahmebereich oben auf das Gerät bzw. auf dessen Randbereich aufgesetzt.

Durch das erfindungsgemäße Stapelelement ist somit auch die Stapelung von Geräten, insbesondere von Kühl- und/oder Gefriertruhen denkbar, die keine ebene, sondern eine gewölbte Oberseite aufweisen.

Der erste und/oder der zweite Aufnahmebereich können eine Auflagefläche sowie eine an diese angrenzende Wandung umfassen. Auf diese Weise kann eine besonders gute Fixierung des oder der Geräte in den Stapelelementen erreicht werden.

Bei der Wandung kann es sich um die die Außenseite des Stapelelementes bildende Wandung handeln.

In weiterer Ausgestaltung der Erfindung ist vorgesehen, dass der erste und/oder der zweite Aufnahmebereich gegenüber der Außenseite des Stapelelementes zurückversetzt ist. Durch einen solchen Überstand der Außenseite der Stapelelemente wird ein Abstandshalter gebildet, der die Wahrscheinlichkeit für das Auftreten von Beschädigungen der Geräte verringert.

Das Stapelelement kann eine oder mehrere Aufnahmen für Standfüße und/oder Rollen aufweisen.

Diese wenigstens eine Aufnahme kann in der Auflagefläche des Stapelelementes angeordnet sein bzw. in diese münden.

Das Stapelelement besteht vorzugsweise aus einem billigen, leichten und festen Material, das in seiner Eigenschaft weicher ist als die Bauteile der Geräte und dadurch eine Beschädigung der Geräte verhindert. In Betracht kommen beispielsweise Styropor oder EPP. Der Einsatz von Styropor ist besonders vorteilhaft, da Styroporteile billig herzustellen sind und da Werkzeuge für Styroporteile günstig sind. Daher kann schnell auf andere Verhältnisse, wie einen Gerätewechsel, Gerätekombinationen, etc. umgestellt werden.

Die vorliegende Erfindung betrifft des weiteren eine Anordnung mit wenigstens einem Kühl- und/oder Gefriergerät, insbesondere mit wenigstens einer Kühlund/oder Gefriertruhe, sowie mit wenigstens zwei Stapelelementen gemäß einem der Ansprüche 1 bis 14, die auf das Gerät aufgesetzt sind.

Die Stapelelemente können beispielsweise auf die beiden seitlichen Randbereiche des Gerätes aufgesetzt werden.

Wie oben ausgeführt, ist die Erfindung jedoch darauf nicht beschränkt. Alternativ oder zusätzlich kann vorgesehen sein, dass die Stapelelemente sich im frontseitigen oder/oder rückwärtigen Randbereich der Geräte befinden.

Das erfindungsgemäße Stapelelement kann im übrigen auch dazu dienen, die Wahrscheinlichkeit für das Auftreten einer Beschädigung des Gerätes zu verringern und/oder dazu, das Gerät beispielsweise durch in das Stapelelement eingesetzte Rollen leichter bewegen zu können.

Dies bedeutet, dass die Erfindung nicht auf Anordnungen beschränkt ist, bei denen zwei oder mehr Geräte übereinander gestapelt sind, sondern auch Anordnungen aus einem Gerät und zwei bzw. mehreren Stapelelementen umfasst.

Weitere Einzelheiten der Erfindung werden anhand eines in der Zeichnung dargestellten Ausführungsbeispiels näher erläutert. Es zeigen:
- Figur 1:: eine perspektivische Darstellung zweier Kühltruhen, die mittels zweier erfindungsgemäßer Stapelelemente aufgestapelt sind und
- Figur 2:: Darstellungen des erfindungsgemäßen Stapelelementes in unterschiedlichen Ansichten.

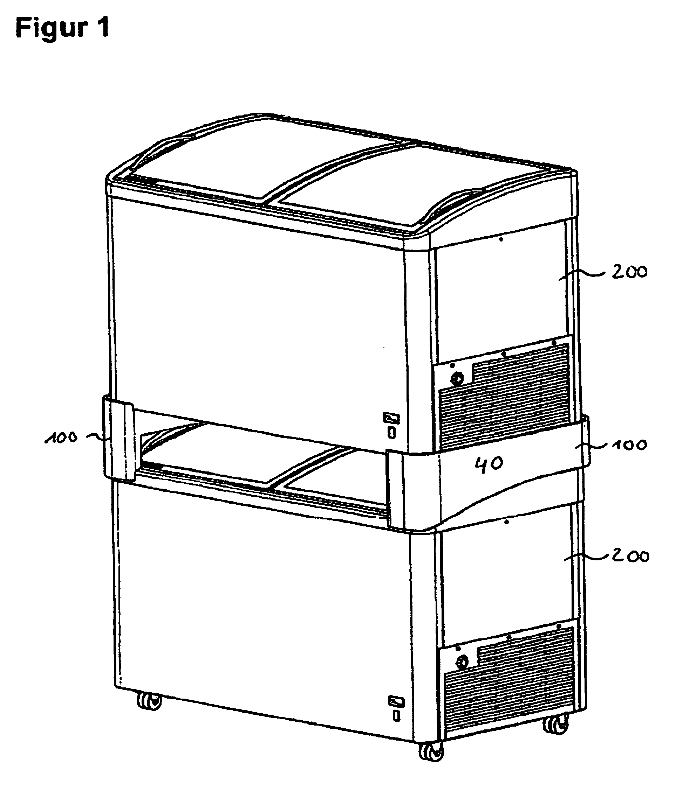

In Figur 1 sind mit dem Bezugszeichen 200 zwei übereinander gestapelte, unverpackte Kühl- bzw. Gefriertruhen dargestellt. Wie dies aus Figur 1 hervorgeht, sind diese mittels zweier Stapelelemente 100 gestapelt, wobei die Stapelelemente 100 jeweils in den seitlichen Randbereichen der Truhen 200 angeordnet sind.

Die Stapelelemente 100 weisen eine Außenwandung 40 auf, die gegenüber den Außenseiten der gestapelten Geräte 200 vorsteht, was den Vorteil mit sich bringt, dass die Wahrscheinlichkeit für das Auftreten von Beschädigungen der Geräte 200 verringert wird, da die Stapelelemente 100 in diesem Fall als Abstandshalter dienen.

Die Stapelelemente 100 erstrecken sich im Bereich der beiden Seiten der Geräte 200 sowie über einen vergleichsweise geringen Teilabschnitt auch im front- und rückwärtigen Randbereich der Geräte 200, wie dies aus Figur 1 hervorgeht.

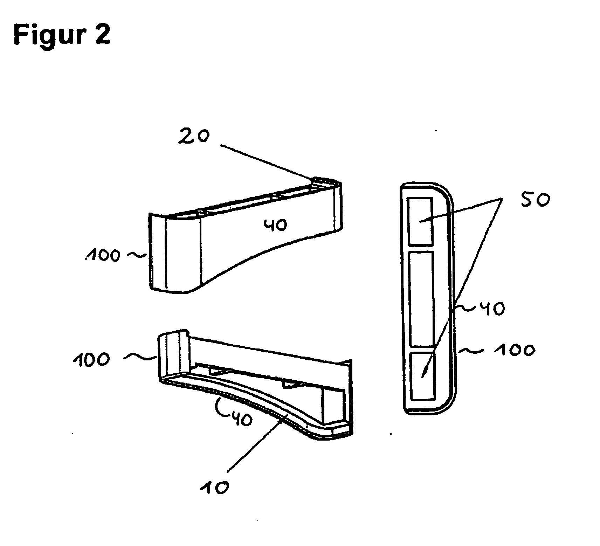

Die Stapelelemente 100 weisen aus Figur 2 ersichtliche Aufnahmebereiche 10, 20 auf, die auf den Geräten 200 aufsitzen bzw. auf denen die Geräte 200 aufliegen.

Wie dies weiter aus Figur 2 hervorgeht, ist in dem hier dargestellten Ausführungsbeispiel der erste Aufnahmebereich 10 gekrümmt ausgeführt, so dass dieser auf die gekrümmte Oberseite der in Figur 1 unten dargestellten Truhe 200 aufgesetzt werden kann. Der gekrümmte Aufnahmebereich 10 des Stapelelementes 100 befindet sich dementsprechend auf der Unterseite des Stapelelementes 100.

Der zweite Aufnahmebereich 20 befindet sich in dem hier dargestellten Ausführungsbeispiel auf der Oberseite des Stapelelementes 200 und ist eben ausgeführt. Der zweite Aufnahmebereich 20 dient zur Aufnahme des bodenseitigen Randbereiches der in Figur 1 oben angeordneten Truhe 200.

Die Aufnahmebereiche 10, 20 werden durch eine Auflagefläche sowie durch eine an die Auflagefläche angrenzende und dazu senkrecht verlaufende Wandung 40 gebildet, wie dies aus Figur 2 hervorgeht. Auf diese Weise wird eine besonders sichere und zuverlässige und vorzugsweise formschlüssige Aufnahme der Geräte 200 in den Stapelelementen 100 gewährleistet.

Wie dies weiter in Figur 2 dargestellt ist, befinden sich in einer oder beiden der Aufnahmeflächen Aufnahmen 50 für Standfüße oder Rollen.

Zur Stapelung von Geräten 200 mittels der in Figur 1 und 2 gezeigten Stapelelemente 100 sind zwei spiegelsymmetrisch ausgeführte Stapelelemente 100 erforderlich, von denen eins rechts und eins links zwischen den Randbereichen der Geräte angeordnet ist, wie dies in Figur 1 dargestellt ist.

Selbstverständlich ist es ebenfalls denkbar, andere Konturierungen der Auflageflächen der Stapelelemente vorzusehen. So ist es beispielweise denkbar, den ersten und den zweiten Aufnahmebereich eben auszuführen, was den Vorteil mit sich bringt, dass die Stapelelemente wechselseitig einsetzbar sind bzw. das überhaupt nur ein Typ von Stapelelementen erforderlich ist, was die Herstellung bzw. deren Bereitstellung vereinfacht.

Vorzugsweise ist der Aufnahmebereich derart ausgeführt, dass möglichst viele unterschiedliche Geräte bzw. Gerätetypen abgedeckt bzw. stapelbar sind.

## Patentansprüche

1. Stapelelement (100) für Kühl- und/oder Gefriergeräte, insbesondere für Kühlund/oder Gefriertruhen (200), wobei das Stapelelement (100) eine Kontur aufweist, die einen ersten Aufnahmebereich (10) für das unten angeordnete Gerät (200) sowie einen zweiten Aufnahmebereich (20) für das darüber befindliche Gerät (200) aufweist,
**dadurch gekennzeichnet, dass**
der erste und/oder der zweite Aufnahmebereich (10, 20) derart ausgestaltet ist, dass in diesem der jeweilige Randbereich sowie ein Teilbereich des jeweiligen front- und/oder rückseitigen Randbereiches der Geräte (200) aufnehmbar ist.

2. Stapelelement (100) nach Anspruch 1, **dadurch gekennzeichnet, dass** das Stapelelement (100) derart ausgeführt ist, dass der erste und der zweite Aufnahmebereich (10, 20) zu einer durch das Stapelelement (100) verlaufenden Ebene spiegelsymmetrisch ausgeführt sind.

3. Stapelelement nach Anspruch 1, **dadurch gekennzeichnet, dass** das Stapelelement (100) derart ausgeführt ist, dass der erste und der zweite Aufnahmebereich (10, 20) zu einer durch das Stapelelement (100) verlaufenden Ebene nicht spiegelsymmetrisch ausgeführt sind wobei das Stapelelement (100) vorzugsweise derart ausgeführt ist, dass einer der Aufnahmebereiche (20) eben oder im wesentlichen eben und der andere der Aufnahmebereiche (10) zumindest abschnittsweise gekrümmt ausgeführt ist.

4. Stapelelement (100) nach einem der vorhergehenden Ansprüche, **dadurch gekennzeichnet, dass** der erste und/oder der zweite Aufnahmebereich (10, 20) eine Auflagefläche sowie eine an diese angrenzende Wandung (40) umfaßt, wobei es sich bei der Wandung um die die Außenseite des Stapelelementes (100) bildende Wandung (40) handelt.

5. Stapelelement (100) nach einem der vorhergehenden Ansprüche, **dadurch gekennzeichnet, dass** der erste und/oder der zweite Aufnahmebereich (10, 20) gegenüber der Außenseite des Stapelelementes (100) zurückversetzt ist.

6. Stapelelement (100) nach einem der vorhergehenden Ansprüche, **dadurch gekennzeichnet, dass** das Stapelelement eine oder mehrere Aufnahmen (50) für Standfüße und/oder Rollen aufweist.

7. Stapelelement (100) nach Anspruch 4 und 6, **dadurch gekennzeichnet, dass** die wenigstens eine Aufnahme (50) in der Auflagefläche des Stapelelementes (100) angeordnet ist.

8. Stapelelement (100) nach einem der vorhergehenden Ansprüche, **dadurch gekennzeichnet, dass** das Stapelelement (100) teilweise oder vollständig aus Kunststoff, vorzugsweise aus Styropor oder EPP besteht.

9. Anordnung mit wenigstens einem Kühl- und/oder Gefriergerät, insbesondere mit wenigstens einer Kühl- und/oder Gefriertruhe (200), sowie mit wenigstens zwei Stapelelementen (100) gemäß einem der Ansprüche 1 bis 8, die auf das Gerät (200) aufgesetzt sind, wobei die Stapelelemente (100) vorzugsweise auf die beiden seitlichen Randbereiche des Gerätes (200) aufgesetzt sind.

10. Anordnung nach Anspruch 9, **dadurch gekennzeichnet, dass** das oder die Geräte (200) sowie die Stapelelemente (100) derart ausgeführt sind, dass die Geräte (200) formschlüssig in dem jeweiligen Aufnahmebereich (10, 20) der Stapelelemente (100) aufgenommen sind.

11. Anordnung nach einem der Ansprüche 9 oder 10, **dadurch gekennzeichnet, dass** das Gerät (200) auf seiner Oberseite flach oder gewölbt ausgeführt ist.

## Claims

1. A stacking element (100) for refrigerator and/or freezer units, in particular for refrigerator chests and/or freezer chests (200), wherein the stacking element (100) has a contour which has a first reception region (10) for the unit (200) arranged at the bottom and a second reception region (20) for the unit (200) located thereabove,
**characterised in that**
the first and/or second reception regions (10, 20) are designed so that the respective marginal region and a part region of the respective front and/or rear marginal region of the unit (200) can be received therein.

2. A stacking element (100) in accordance with claim 1, **characterised in that** the stacking element (100) is designed such that the first and second reception regions (10, 20) are made in mirror symmetry to a plane extending through the stacking element (100).

3. A stacking element in accordance with claim 1, **characterised in that** the stacking element (100) is made such that the first and second reception regions (10, 20) are not made with mirror symmetry to a plane extending through the stacking element (100), with the stacking element (100) preferably being designed such that one of the reception regions (20) is planar or substantially planar and the other of the reception regions (10) is curved at least section-wise.

4. A stacking element (100) in accordance with one of the preceding claims, **characterised in that** the first and/or second reception regions (10, 20) include(s) a support surface as well as a wall (40) adjacent thereto, with the wall being the wall (40) forming the outer side of the stacking element (100).

5. A stacking element (100) in accordance with one of the preceding claims, **characterised in that** the first and/or second reception regions (10, 20) is/are set back with respect to the outer side of the stacking element (100).

6. A stacking element (100) in accordance with one of the preceding claims, **characterised in that** the stacking element has one or more mounts (50) for feet and/or castors.

7. A stacking element (100) in accordance with claim 4 and 6, **characterised in that** the at least one mount (50) is arranged in the support surface of the stacking element (100).

8. A stacking element (100) in accordance with one of the preceding claims, **characterised in that** the stacking element (100) partly or fully comprises plastic, preferably polystyrene or EPP.

9. An arrangement comprising at least one refrigerator unit and/or freezer unit, in particular comprising at least one refrigerator chest and/or freezer chest (200), as well as comprising at least two stacking elements (100) in accordance with one of the claims 1 to 8 which are placed onto the unit (200), with the stacking elements (100) preferably being placed onto the two lateral marginal regions of the unit (200).

10. An arrangement in accordance with claim 9, **characterised in that** the unit(s) (200) and the stacking elements (100) are made such that the units (200) are received in a shape-matching manner in the respective reception regions (10, 20) of the stacking elements (100).

11. An arrangement in accordance with one of the claims 9 or 10, **characterised in that** the unit (200) is flat or arched at its upper side.

## Revendications

1. Elément d'empilage (100) pour des appareils de refroidissement et/ou de congélation, en particulier pour des réfrigérateurs et/ou congélateurs coffre (200), où l'élément d'empilage (100) présente un contour qui présente une première zone de réception (10) pour l'appareil (200) disposé en bas ainsi qu'une deuxième zone de réception (20) pour l'appareil se trouvant au-dessus (200), **caractérisé en ce que** la première et/ou la deuxième zone de réception (10, 20) est réalisée de telle sorte que dans celle-ci, la zone de bord respective ainsi qu'une zone partielle de la zone de bord respective côté avant et/ou arrière des appareils (200) peut être reçue.

2. Elément d'empilage (100) selon la revendication 1, **caractérisé en ce que** l'élément d'empilage (100) est réalisé de telle sorte que la première et la deuxième zone de réception (10, 20) sont réalisées d'une manière spéculairement symétrique à un plan passant à travers l'élément d'empilage (100).

3. Elément d'empilage selon la revendication 1, **caractérisé en ce que** l'élément d'empilage (100) est réalisé de telle sorte que la première et la deuxième zone de réception (10, 20) ne sont pas réalisées d'une manière spéculairement symétrique à un plan passant à travers l'élément d'empilage (100), où l'élément d'empilage (100) est réalisé de préférence de telle sorte que l'une des zones de réception (20) est plane ou sensiblement plane et l'autre des zones de réception (10) est au moins courbée par sections.

4. Elément d'empilage (100) selon l'une des revendications précédentes, **caractérisé en ce que** la première et/ou la deuxième zone de réception (10, 20) comprend une face d'appui ainsi qu'une paroi (40) avoisinant celle-ci, où dans le cas de la paroi, il s'agit de la paroi (40) formant le côté extérieur de l'élément d'empilage (100).

5. Elément d'empilage (100) selon l'une des revendications précédentes, **caractérisé en ce que** la première et/ou la deuxième zone de réception (10, 20) est décalée vers l'arrière par rapport au côté extérieur de l'élément d'empilage (100).

6. Elément d'empilage (100) selon l'une des revendications précédentes, **caractérisé en ce que** l'élément d'empilage présente un ou plusieurs logements (50) pour des pieds et/ou des rouleaux.

7. Elément d'empilage (100) selon la revendication 4 et 6, **caractérisé en ce qu'**au moins un logement (50) est disposé dans la face d'appui de l'élément d'empilage (100).

8. Elément d'empilage (100) selon l'une des revendications précédentes, **caractérisé en ce que** l'élément d'empilage (100) est réalisé partiellement ou complètement en matériau synthétique, de préférence en Styropor ou EPP.

9. Agencement avec au moins un appareil de refroidissement et/ou de congélation, en particulier avec au moins un réfrigérateur et/ou congélateur coffre (200), et avec au moins deux éléments d'empilage (100) selon l'une des revendications 1 à 8, qui sont placés sur l'appareil (200), où les éléments d'empilage (100) sont placés de préférence sur les deux zones de bord latérales de l'appareil (200).

10. Agencement selon la revendication 8, **caractérisé en ce que** le ou les appareils (200) ainsi que les éléments d'empilage (100) sont réalisés de telle sorte que les appareils (200) sont reçus par concordance des formes dans la zone de réception respective (10, 20) des éléments d'empilage (100).

11. Agencement selon l'une des revendications 9 ou 10, **caractérisé en ce que** l'appareil (200) est réalisé d'une manière plate ou bombée sur son côté supérieur.
